# EUROPEAN PATENT SPECIFICATION

(11) **EP 3 349 522 B1**
(45) Date of publication and mention of the grant of the patent: **22.09.2021**
(21) Application number: 15905119.2
(22) Date of filing: 30.09.2015
(51) Int. Cl.: H04B 7/06

(54) **RADIO ACCESS METHOD, UE, AND BASE STATION**
FUNKZUGRIFFSVERFAHREN, BENUTZERGERÄT UND BASISSTATION
PROCÉDÉ D'ACCÈS RADIO, UE ET STATION DE BASE

(43) Date of publication of application: 18.07.2018
(73) Proprietor: Huawei Technologies Co., Ltd., Longgang District Shenzhen, Guangdong 518129 (CN)
(72) Inventor: HE, Chuanfeng, Shenzhen Guangdong 518129 (CN); QU, Bingyu, Shenzhen Guangdong 518129 (CN); LIU, Kunpeng, Shenzhen Guangdong 518129 (CN)
(74) Representative: Gill Jennings & Every LLP
(86) International application number: PCT/CN2015/091333
(87) International publication number: WO 2017/054207

(56) References cited:
- CN-A- 102 316 466
- CN-A- 104 641 569
- CN-A- 104 718 712
- US-A1- 2004 229 563
- US-A1- 2013 029 685
- US-A1- 2015 131 750
- None

## Description

### TECHNICAL FIELD

The present disclosure relates to the field of communications technologies, and in particular, to a radio access method, UE, and a base station.

### BACKGROUND

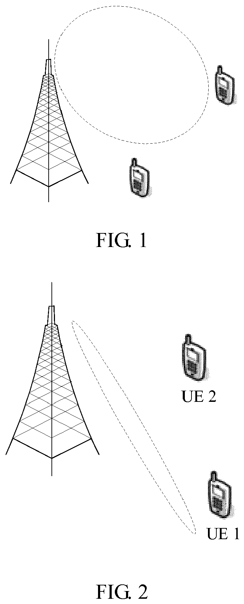

In a low-frequency scenario, a beam formed by each antenna port is a wide beam as shown in FIG. 1, and therefore, users of an entire cell can be covered. During transmission on a broadcast channel, transmission of a system message, paging, and the like for the cell, a wide beam may be used for transmission, so as to provide good coverage. However, a path loss increases in a high-frequency scenario, and a beamforming (beamforming) technology of massive multiple-input multiple-output (massive MIMO) is required to form an extremely high antenna gain to compensate the path loss. There may be a lot of massive MIMO antennas, even hundreds of such antennas. In addition to forming a high antenna gain, a formed beam is extremely narrow, so that one narrow beam cannot cover all users in a cell. For example, in FIG. 2, a formed beam can cover only user equipment (UE) 1, and UE 2 cannot be covered by the beam. Therefore, one beam cannot cover all user equipments in a cell, and as a result, user equipment cannot access a network in time.
US 2015/0131750 A1 discloses technology to adaptively sectorize a spatial region for parallel multi-user transmissions. In an example, a node (e.g., evolved Node B (eNB)) can include computer circuitry configured to: generate a set of precoding matrices for a set of beam cones in the spatial region; and generate a beam cone for multi-user beamforming transmissions using system information for the beam cone. A precoding matrix in the set of precoding matrices can be used for each beam cone, and each beam cone can cover a beam cone spatial region that differs from another beam cone spatial region of another beam cone in the spatial region. Each beam cone can include system information that differs from the system information of the other beam cones in the spatial region.

How to ensure user equipment in narrow beam transmission to access a network in time is an urgent problem that needs to be resolved.

### SUMMARY

Implementations of the present disclosure provide a radio access method, a base station, and UE, so as to resolve at least a problem that user equipment accesses a network in time in narrow beam transmission.

The invention has been defined in the independent claims. Further specific technical features have been defined in the dependent claims.

The embodiments of the present invention provide a radio access method, a base station, and UE. By sending the first signal sets on a plurality of resources, the UE in the narrow beam transmission may be synchronized with the base station in time. Some of the first signal sets include indication information, and the indication information is used to instruct the base station to send the system message by using the second space resource or is used to indicate that the M first space resources are valid space resources, so as to reduce a delay of obtaining the system message by the UE, thereby reducing an access delay of the UE. The first signal sets are sent on some of all space resources, and the second signal sets are sent on remaining space resources, and therefore system overheads used for outer loop beam scanning can be reduced.

### BRIEF DESCRIPTION OF DRAWINGS

To describe the technical solutions in the implementations of the present disclosure or in the prior art more clearly, the following briefly describes the accompanying drawings required for describing the implementations or the prior art. Apparently, the accompanying drawings in the following description show merely some implementations of the present disclosure, and a person of ordinary skill in the art may still derive other drawings from these accompanying drawings without creative efforts.
FIG. 1 is a schematic diagram of base station coverage in a low-frequency scenario in the prior art;
FIG. 2 is a schematic diagram of base station coverage according to an implementation of the present disclosure;
FIG. 3 is a schematic diagram of a double-loop beam access procedure according to an implementation of the present disclosure;
FIG. 4 is a schematic diagram of a time sequence between an outer loop beam signal and an inner loop beam signal according to an implementation of the present disclosure;
FIG. 5 is a schematic flowchart of a radio access method according to an implementation of the present disclosure;
FIG. 6 is a schematic diagram of a subframe structure of an outer loop beam signal according to an implementation of the present disclosure;
FIG. 7 is a schematic diagram of a subframe structure of an inner loop beam signal according to an implementation of the present disclosure;
FIG. 8 is a schematic flowchart of a radio access method according to an implementation of the present disclosure, which is provided as an illustrative example not claimed in the present application;
FIG. 9 is a schematic diagram of a subframe structure of an inner loop beam signal according to an implementation of the present disclosure, which is provided as an illustrative example not claimed in the present application;
FIG. 10 is a schematic flowchart of a radio access method according to an implementation of the present disclosure, which is provided as an illustrative example not claimed in the present application;
FIG. 11 is a schematic structural diagram of a base station according to an implementation of the present disclosure;
FIG. 12 is a schematic structural diagram of user equipment according to an implementation of the present disclosure;
FIG. 13 is a schematic structural diagram of a base station according to an implementation of the present disclosure which is provided as an illustrative example not claimed in the present application; and
FIG. 14 is a schematic structural diagram of user equipment according to an implementation of the present disclosure which is provided as an illustrative example not claimed in the present application.

### DESCRIPTION OF IMPLEMENTATIONS

To make the objectives, technical solutions, and advantages of this disclosure clearer, the following further describes the implementations of this disclosure in detail with reference to the accompanying drawings. The implementations described below are not all claimed, they are included to help understanding the context of the disclosure. While the description refers to various implementations, the implementations of the disclosure are those which comprise at least all the features of an independent claim. Any implementation which does not fall within the scope of the claims does not form part of the disclosure, but rather included as an illustrative example that is useful for understanding the disclosure.

For ease of understanding, description of some concepts related to the present disclosure is provided as an example for reference, as follows:

The 3^{rd} Generation Partnership Project (3GPP) is a project for developing a wireless communications network. In general, an organization related to the 3GPP is referred to as a 3GPP organization.

A wireless communications network is a network that provides a wireless communications function. The wireless communications network may use different communications technologies, such as Code Division Multiple Access (CDMA), Wideband Code Division Multiple Access (WCDMA), Time Division Multiple Access (TDMA), Frequency Division Multiple Access (FDMA), orthogonal frequency division multiple access (OFDMA), single carrier frequency division multiple access (SC-FDMA), and carrier sense multiple access with collision avoidance. According to factors such as a capacity, a rate, and a delay of different networks, networks may be divided into a 2G (generation) network, a 3G network, and a 4G network. Atypical 2G network includes a Global system for mobile communications (GSM) network or a general packet radio service (GPRS) network. A typical 3G network includes a Universal Mobile Telecommunications System (UMTS) network. A typical 4G network includes a Long Term Evolution (LTE) network. Alternatively, the UMTS network sometimes may be referred to as a universal terrestrial radio access network (UTRAN), and alternatively, the LTE network sometimes may be referred to as an evolved universal terrestrial radio access network (E-UTRAN). According to different resource allocation manners, wireless communications networks may be divided into a cellular communications network and a wireless local area network (WLAN). The cellular communications network is based on scheduling, and the WLAN is based on contention. All the foregoing 2G, 3G, and 4G networks are cellular communications networks. A person skilled in the art should know that with development of technologies, technical solutions provided in the implementations of the present disclosure may also be applied to another wireless communications network such as a 4.5G or 5G network, or another non-cellular communications network. For brevity, in the implementations of the present disclosure, the wireless communications network sometimes is referred to as the network.

User equipment (UE) is a terminal device, and may be a movable terminal device or an unmovable terminal device. The device is mainly configured to receive or send service data. User equipment may be distributed in a network. In different networks, the user equipment has different names, such as a terminal, a mobile station, a subscriber unit, a station, a cellular phone, a personal digital assistant, a wireless modem, a wireless communications device, a handheld device, a laptop computer, a cordless phone, and a wireless local loop board. The user equipment may communicate with one or more core networks by using a radio access network (RAN) (an access part of the wireless communications network), for example, exchange voice and/or data with the radio access network.

A base station (BS) device may also be referred to as a base station, and is an apparatus that is deployed in the radio access network and that is configured to provide a wireless communications function. For example, in a 2G network, devices that provide a base station function include a base transceiver station (BTS) and a base station controller (BSC). In a 3G network, devices that provide a base station function include a NodeB and a radio network controller (RNC). In a 4G network, devices that provide a base station function include an evolved NodeB (eNB). In a WLAN, a device that provides a base station function is an access point (AP).

Frame structure, radio frame, subframe, symbol, and timeslot:

The frame structure is a structure obtained after a time resource (time domain) used for signal transmission is divided. In wireless communications, time units in a frequently-used frame structure that are sorted by size in descending order are successively: a radio frame, a subframe, and a timeslot. Specifically, a time length corresponding to each time unit may be set according to a specific protocol requirement. A frame structure in LTE is used as an example: A length of a radio frame is 10 ms, and the radio frame includes 10 subframes; a length of each subframe is 1 ms, and each subframe further includes two timeslots; and a length of each slot is 0.5 ms. A symbol is a minimum unit of a signal. An LTE network is used as an example. Each orthogonal frequency division multiplexing (OFDM) subcarrier is corresponding to one OFDM symbol. If a guard interval between symbols is not considered, a length of an OFDM symbol (an occupied time) is 1/subcarrier interval. If the guard interval between symbols is considered, a time occupied by an OFDM symbol is a sum of a length of an OFDM symbol and a length of a cyclic prefix (CP).

Frame number: a number of each radio frame. The LTE network is used as an example. Frames in the LTE network are numbered from 0 to 1023, and are then numbered from 0 again.

Resource: including at least one of a time resource, a frequency resource, a code resource, or a space resource.

Time resource: a resource obtained after a resource occupied by a signal is measured in terms of time. For example, a signal occupies two OFDM symbols, one subframe, or three radio frames in terms of time. The time resource may include an absolute time resource and a relative time resource, for example, at least one of a number of a radio frame, a relative location of a subframe in a radio frame, or a relative location of a symbol in a subframe. The time resource is usually described as unchangeable or changeable for the relative time resource. That time resources are usually described as the same may mean that absolute time resources are the same, or relative time resources are the same.

Frequency resource: a resource obtained after a resource occupied by a signal is measured in terms of frequency. For example, a signal occupies 10 MHz in terms of frequency. In an OFDM system, a quantity of subcarriers is usually used to describe an occupied frequency resource.

Time-frequency resource: a resource obtained after a resource occupied by a signal is measured in terms of time and frequency. For example, a signal occupies two OFDM symbols in terms of time and occupies 10 MHz in terms of frequency.

Code resource: a resource obtained after a resource occupied by a signal is measured in terms of code. For example, a spreading code in WCDMA, or a sequence resource used by a signal is also referred to as the code resource. For example, a sequence used by a synchronization signal is one type of the code resource.

Space resource: a resource obtained after a resource occupied by a signal is measured in terms of beam. For multiple input multiple output (MIMO) transmission, a signal may use beams in different directions to perform parallel transmission on a same time-frequency resource.

System information broadcast (system message broadcast): System information broadcast may be referred to as system information, and mainly provides main information about an access network, so as to establish a wireless connection to UE, so that the UE obtains sufficient access information and common configuration parameters related to cell selection and reselection. System messages in LTE are divided into a plurality of system information blocks (SIB). One of the SIBs is referred to as a master information block (MIB), and the MIB is also referred to as broadcast signals. Other SIBs are referred to as system messages. System information broadcast in LTE and system information broadcast in 3G are completely consistent with each other in function, but are significantly different in scheduling and specific information content. The MIB usually includes a limited quantity of most important and most frequently-used transmission parameters. The other SIBs usually include notification information such as cell radio configuration, cell reselection information, a neighboring cell list, a home eNB identifier, an earthquake and tsunami warning system (ETWS), or commercial mobile alert system (CMAS), and a parameter such as Multimedia Broadcast Multicast Service (MBMS) control information.

In addition, in the implementations of the present disclosure, the term "for example" is used to indicate an example, illustration, or description. Any implementation or design solution described as "an example" in this application should not be described as more advantageous than other implementations or design solutions. More exactly, the term "an example" is used to present a concept in a specific manner.

In the implementations of the present disclosure, information, signal, message, and channel may be interchangeably used sometimes. It should be noted that expressed meanings are consistent when their differences are not emphasized. "of", "relevant", and "corresponding" may be interchangeably used sometimes. It should be noted that expressed meanings are consistent when their differences are not emphasized.

Network architectures and service scenarios described in the implementations of the present disclosure are intended to describe the technical solutions in the implementations of the present disclosure more clearly, but are not intended to limit the technical solutions provided in the implementations of the present disclosure. A person of ordinary skill in the art may understand that, with evolution of the network architecture and appearance of a new service scenario, the technical solutions provided in the implementations of the present disclosure may also be used to resolve similar technical problems.

The implementations of the present disclosure may be applied to a time division multiplexing scenario, or may be applied to a frequency division multiplexing scenario.

In the implementations of the present disclosure, a 4G network scenario in a wireless communications network is used for description. It should be noted that the solutions in the implementations of the present disclosure may further be applied to another wireless communications network, and correspondingly, a name may also be replaced with a name of a corresponding function in the another wireless communications network.

In the existing LTE, an initial access procedure of UE is: A base station sends a synchronization signal, the UE obtains timing synchronization and a cell ID according to the synchronization signal, the UE obtains a location of a common reference signal (CRS) according to the cell ID, and measures reference signal received power (RSRP), so as to initially select a cell. The UE camps on the initially selected cell, and performs detection on a broadcast channel and a system message according to the CRS to obtain a system message of the cell. When the UE initiates a call or is paged, the UE initiates random access, and an RRC connection is established between the UE and the base station.

A design of the synchronization signal, the broadcast channel, or the system message in the foregoing initial access procedure of the UE does not match a narrow beam scenario. Consequently, some user equipments in the cell cannot be covered, and the user equipments cannot access a network in time.

The implementations of the present disclosure provide a radio access method, a base station, and user equipment, which may be applied to the narrow beam scenario. "access" in the implementations of the present disclosure may be understood as a communication establishment initial process in a broad sense.

In the implementations of the present disclosure, downlink communication between the base station and the UE is performed by using a narrow beam, and therefore, uplink communication may be connected with the downlink communication by using beam information. The beam information may be carried by using an uplink signal or a downlink signal. The beam information carried herein includes information about a beam identifier or information corresponding to the beam identifier, and may be carried by using at least one of a used time resource, frequency resource, or code resource.

In the implementations, information that is required for radio access (referred to as double-loop beam access in the implementations) by UE and that is sent by the base station is delivered twice. In the implementations, the delivery for the first time is referred to as outer loop beam scanning, and the delivery for the second time is referred to as inner loop beam scanning. Each inner loop beam has a corresponding outer loop beam, and "corresponding" herein may mean that a coverage area of the inner loop beam is approximately the same as a coverage area of the outer loop beam (for example, main lobe coverage of the inner loop beam is consistent with main lobe coverage of the outer loop beam, or range similarity between the inner loop beam and the outer loop beam is relatively high). A beam width of an outer loop beam may be the same as or may be different from a beam width of a corresponding inner loop beam. A beam direction of an outer loop beam may be the same as or may be different from a beam direction of a corresponding inner loop beam. In terms of division granularity for dividing space, a division granularity of an outer loop beam may be the same as or may be different from (smaller or larger than) a division granularity of an inner loop beam. For example, when there are eight outer loop beams, the eight outer loop beams are inner loop beams; or when there are eight outer loop beams and four inner loop beams, every two outer loop beams are corresponding to one inner loop beam. A specific correspondence between the outer loop beam and the inner loop beam may be set according to an actual requirement. The correspondence may be one-to-many, many-to-one, or many-to-many. This is not limited herein. For example, an inner loop beam and its corresponding outer loop beam have a same beam width and a same direction; or the inner loop beam and its corresponding outer loop beam have a same beam width, but the inner loop beam and its corresponding outer loop beam have a beam direction difference within a specific threshold, and the threshold may be defined according to an actual requirement, for example, 10° or 20°; or the inner loop beam and its corresponding outer loop beam have a same beam direction or have a phase difference within a specific threshold, and a beam width of the inner loop beam is larger or smaller than a beam width of the outer loop beam. One inner loop beam may be corresponding to more than one outer loop beam; or one outer loop beam is corresponding to more than one inner loop beam.

The outer loop beam scanning is used for cell discovery. The UE may scan an entire cell according to a period of the outer loop beam, so as to detect a synchronization channel and a common channel that are related to the outer loop beam. For example, the period is 40 ms and there are eight broadcast beams. The eight broadcast beams are separately sent once every 40 ms. Each beam carries a synchronization signal and a PBCH for detection by the UE and obtaining an MIB. The UE feeds back corresponding beam information to the base station based on a channel detected on the beams. In the inner loop beam scanning, based on the outer loop beam scanning, the base station scans, according to the beam information fed back by the UE, only a beam (for example, a sector beam) on which the UE exists, and sends a synchronization channel and a common channel. By using a double-loop beam access method, in a high-frequency multi-beam sending scenario, different beams may serve users in the cell at different times. On each beam, common channels such as a broadcast channel and a synchronization channel are required to cover all users in the cell, so that the users in the cell achieve synchronization and obtain a required system message to access the cell. The base station needs to send synchronization channels and common channels of only some beams during the inner loop scanning. This may reduce system overheads, reduce interference to another beam, and reduce energy consumption of the base station.

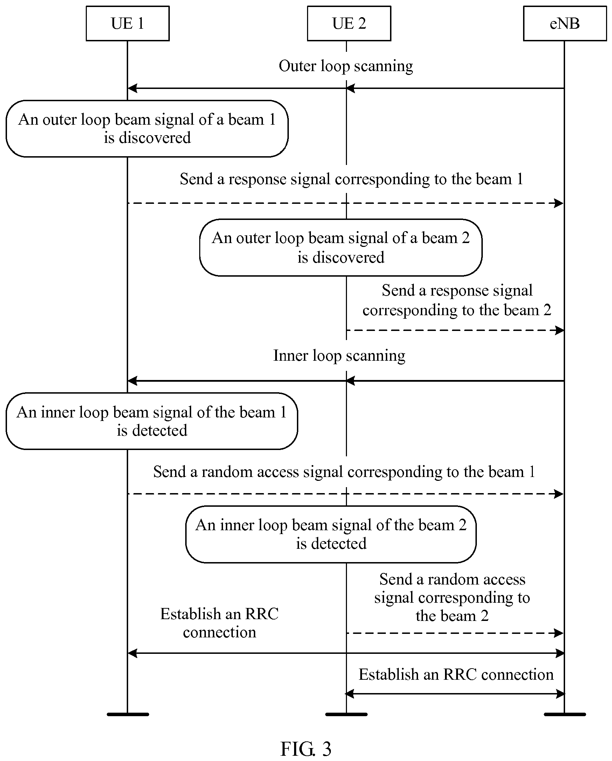

A specific access procedure may be shown in FIG. 3:
a. The base station sends discovery signals of all beams according to an outer loop beam scanning period.
   An objective of the outer loop beam scanning is to perform overall space scanning on coverage of the cell. The base station may achieve the overall scanning objective by sending an outer loop beam signal on each beam. For example, the discovery signal may be a synchronization signal or a broadcast signal. The synchronization signal may be a primary synchronization signal (PSS)/secondary synchronization signal (SSS). The broadcast signal, for example, may be a physical broadcast channel (PBCH).
b. The UE detects the discovery signal to obtain a physical cell ID (PCI) and a beam ID, and feeds back the beam ID by using an uplink channel associated with an outer loop beam.
   For a beam on which the UE exists, the UE may determine, according to the discovery signal, a cell and a beam to which the UE belongs. For example, the base station obtains a physical cell PCI and a beam ID by using the synchronization signal, or obtains the beam ID by using the broadcast signal.
   A purpose of feeding back the beam ID is to allow the base station to know a beam on which the inner loop beam scanning is to be performed, that is, a beam on which the UE exists, so as to determine an inner loop beam of the inner loop beam scanning. The base station does not need to know details about the UE.
c. The base station initiates the inner loop beam scanning according to the feedback from the UE.
   The base station may determine, according to information about the outer loop beam fed back by one or more UEs, a corresponding inner loop beam. Alternatively, the base station may determine, according to information about the inner loop beam fed back by the UE, a corresponding inner loop beam. Specifically, the corresponding inner loop beam may be determined according to a correspondence between the outer loop beam and the inner loop beam.
   A signal sent during the inner loop beam scanning is referred to as an inner loop beam signal, and a signal sent during the outer loop beam scanning is referred to as an outer loop beam signal.
   To ensure that the feedback from the UE in step b may be correctly received by the base station, in step a, an outer loop beam signal of each beam sent by the base station includes at least a synchronization signal. If time of the inner loop beam scanning is synchronized with time of the outer loop beam scanning, the inner loop beam signal may not include a synchronization signal. However, to improve synchronization performance, even if the time of the inner loop beam scanning is synchronized with the time of the outer loop beam scanning, the inner loop beam signal may include a synchronization signal.
   A combination of the outer loop beam signal and the inner loop beam signal may include all signals (referred to as a signal set used for access) required by the UE to perform radio access, for example, a synchronization signal PSS, a broadcast signal SSS, a system message SIB/MIB, and a measurement pilot signal, so as to complete the radio access by the UE. How these signals are specifically allocated as outer loop beam signals and inner loop beam signals may be determined according to an actual condition. This will be described in detail in subsequent implementations of the present disclosure, but does not limit the solutions of the implementations.
d. The UE initiates a random access procedure, and establishes an RRC connection to the base station.

The UE reads the system message by receiving the inner loop beam signal, obtains configuration information of a physical random access channel (PRACH), and further accesses the cell by performing the random access procedure and enters RRC connected mode.

N antennas included in the base station are corresponding to N beams. The base station sends a first signal set on the outer loop beam, and sends a fifth signal set on the inner loop beam. A combination of the first signal set and the fifth signal set may include all signals (referred to as a signal set used for access) required by the UE to perform radio access, for example, a synchronization signal, a broadcast signal, system message, and a measurement pilot signal, so as to complete the radio access by the UE.

The synchronization signal is used to implement at least one of time synchronization or frequency synchronization. The measurement pilot signal is used to perform channel estimation, and is further used for radio resource management (RRM) measurement. The broadcast signal is used to broadcast some most important and most frequently-used transmission parameters. The system message is used to send some system configuration information.

The first signal set may include a synchronization signal (PSS and SSS) and/or a PBCH channel.

For example, to distinguish between the outer loop beam signal and the inner loop beam signal, optionally, a synchronization signal (may be referred to as a first synchronization signal or an outer loop synchronization signal) in the first signal set may be designed to be different from a synchronization signal (may be referred to as a fifth synchronization signal or an inner loop synchronization signal) in the fifth signal set. The difference may include, for example, at least one of the following: sequences are different; a symbol interval between primary synchronization signals (PSS) included in the synchronization signals and a symbol interval between secondary synchronization signals (SSS) are different; quantities of time resources occupied by the synchronization signals included in the synchronization signals are different; or quantities of frequency resources occupied by the synchronization signals are different. In this way, the UE may determine, according to different detected synchronization signals, an outer loop scanning process, or an inner loop scanning process, and further determines whether to feed back a response signal. If an outer loop synchronization signal is determined, the UE feeds back a response signal; or if an inner loop synchronization signal is determined, the UE does not feed back the response signal. Optionally, the distinguishing between the outer loop beam signal and the inner loop beam signal may be implemented in another manner, and the first synchronization signal and the fifth synchronization are designed to be the same.

In a narrow beam scenario, to cover an entire cell, the base station includes a plurality of antennas that are used to transmit beams in different directions; that is, the base station includes N first space resources.

The base station sends first signal sets on the N first space resources, so as to perform time sharing scanning on the entire cell.

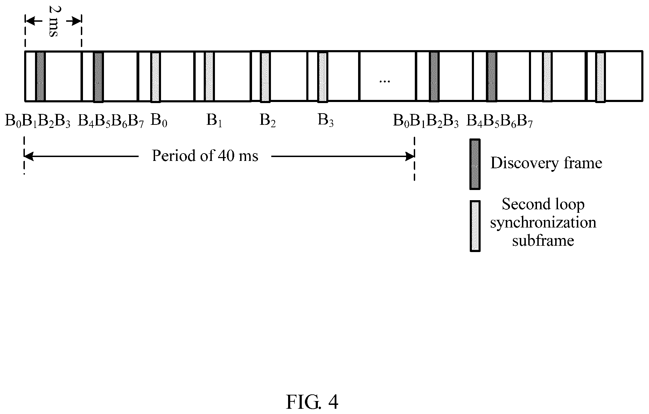

For example, as shown in FIG. 4, one radio frame is 2 ms, each radio frame is used to send four outer loop beam signals, and each radio frame includes 10 subframes (each subframe is 0.2 ms). Each subframe may support sending of four beams. It is assumed that one cell needs to traverse 12 beams to cover all users. A second subframe in a first radio frame is used to send an outer loop beam signal by using B0-B3, a second subframe in a second radio frame is used to send an outer loop beam signal by using B4-B7. Therefore, three radio frames are required to scan 12 beams.

When there are a relatively small quantity of UEs in a cell, a small quantity of beams are used to send inner loop beam signals. To reduce system overheads, the outer loop beam signals may be used to send PSSs/SSSs and MIBs of all beams, but are not used to send SIBs. When a beam used to send the inner loop beam signal is determined, the beam is used to send a PSS/SSS, an MIB, and an SIB of a beam that is used to send only an inner loop beam signal. An information amount of the SIB is relatively large, and therefore, overheads of a system message and a synchronization channel are greatly reduced when compared with overheads of system message and a synchronization channel during outer loop beam scanning. However, the UE needs to receive the SIB during inner loop beam scanning, that is, detecting a synchronization channel, a PBCH, and a corresponding system message (SI) of an inner loop beam, so as to initiate access by using a random access channel (RACH) resource indicated in the SI to establish an RRC connection to the cell. An access delay is high.

To ensure that the UE can access a network in time, the base station may determine, according to a preset rule, M first space resources (outer loop beams) on which M second signal sets (outer loop beam signals) including indication information are to be sent, where M and N are positive integers, and M is less than or equal to N.

Optionally, the base station may randomly select some beams to send the first signal sets including indication information. The indication information is used to instruct the base station to send the system message by using M second space resources (inner loop beams), or indicate that the M first space resources are valid space resources.

Optionally, the base station may uniformly select some beams to send the second signal sets including indication information. The indication information is used to instruct the base station to send the system message by using the M second space resources (inner loop beams), or indicate that the M first space resources are valid space resources. The uniform selecting herein may include: uniformly selecting according to distribution of the first space resource in space, or selecting according to a number interval of the first space resource, or according to another rule. This is not limited in this application.

Optionally, the base station may carry indication information in a first signal set that is sent on a valid beam fed back by the UE in a previous period.

In this way, after the base station sends M system messages on the M second space resources, the UE may receive the system message on the second space resource according to the indication information with no need to detect the synchronization channel, the PBCH, or the system message of the inner loop beam, so as to quickly access the network.

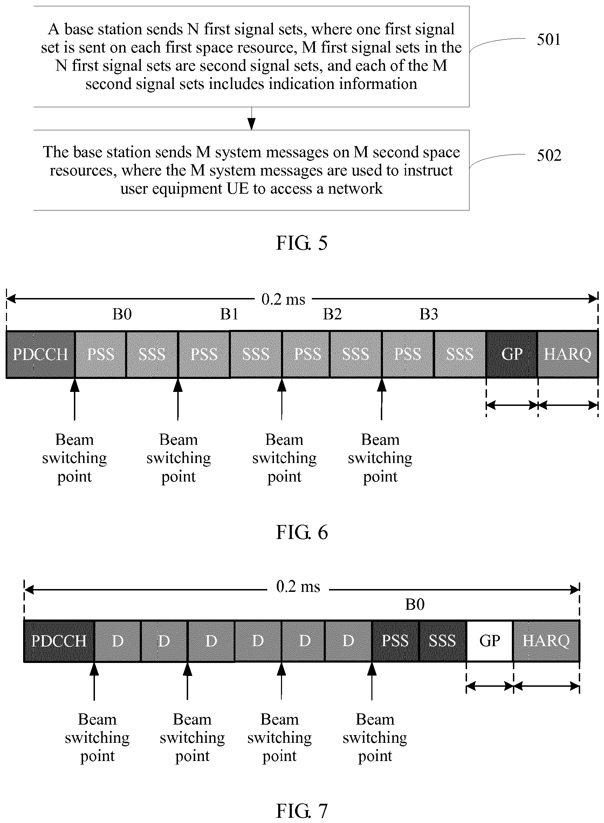

Specifically, an implementation of the present invention provides a radio access method. As shown in FIG. 5, the method includes the following steps.

501. Abase station sends N first signal sets, where one first signal set is sent on each first space resource, M first signal sets in the N first signal sets are second signal sets, and each of the M second signal sets includes indication information.

The indication information is used to indicate that system messages are to be sent on M second space resources, or the indication information is used to indicate that M first space resources on which the second signal sets are to be sent are valid space resources, where M and N are positive integers, and M is less than or equal to N.

For example, before the base station sends N first signal sets on N first space resources of a first cell, the base station may determine, according to a preset rule, the M first space resources on which the M first signal sets including indication information are sent. That is, the base station may specify M first signal sets on M first space resources as second signal sets to send indication information, so as to indicate that the M first space resources are valid space resources, so that a system message is sent only on a valid space resource. Alternatively, the base station indicates to UE that the base station specifies the M second space resources for sending the system message, so that the UE may directly receive the system message from the specified second space resources according to the indication information, so as to quickly access a network.

502. The base station sends M system messages on M second space resources, where the M system messages are used to instruct user equipment (UE) to access a network.

The system message includes a system information block SIB 1.

The first signal set includes a first synchronization signal and/or a first broadcast signal.

For example, the base station indicates, by using information on a PBCH, to the UE whether a beam needs to send an SIB or whether the beam is a valid beam. The UE may receive the SIB 1 and another SIB according to the indication information. A specific indication manner may include:

Optionally, the first broadcast signal includes information carried on a physical broadcast channel PBCH.

The information carried on the PBCH includes an indication information field that is used to instruct the base station to send the system message by using the second space resource.

For example, the PBCH carries 1-bit indication information. Currently, the PBCH carries 14-bit information to indicate a downlink system bandwidth, a system frame number, and Physical Hybrid ARQ Indicator Channel (PHICH) configuration. In addition, the PBCH carries 10 idle bits. Therefore, after 1-bit indication information is added, the PBCH carries 15 bit wanted information and 9 idle bits.

Optionally, the first broadcast signal includes the information carried on the physical broadcast channel PBCH.

The information carried on the PBCH is scrambled by using a first scrambling code and is used to instruct the base station to send the system message by using the second space resource.

For example, the information carried on the PBCH may remain unchanged. By using different scrambling codes for scrambling, the UE is implicitly notified whether the beam needs to send an SIB. For example, it is specified that a scrambling code used for PBCH scrambling includes a scrambling code 1 and a scrambling code 2. When the UE blindly detecting the PBCH, if correct information is detected by using the scrambling code 1, that is, cyclic redundancy code (CRC) check is correct, it is considered that the beam does not need to send an SIB; or if correct information is detected by using the scrambling code 2, it is considered that the beam needs to send an SIB.

Optionally, the first broadcast signal includes the information carried on the physical broadcast channel (PBCH), a cyclic redundancy code (CRC) of the information carried on the PBCH is a first mask, and the first mask is used to instruct the base station to send the system message by using the second space resource.

For example, the information carried on the PBCH remains unchanged. By adding different masks to the CRC, the UE is implicitly notified whether the beam needs to send an SIB. For example, it is specified that a mask used for masking of a CRC of a PBCH includes a mask 1 and a mask 2. When the UE blindly detects an PBCH, if correct CRC check is detected by using the mask 1, it is considered that the beam does not need to send an SIB; or if correct CRC check is detected by using the mask 2, it is considered that the beam needs to send an SIB.

Optionally, the first broadcast signal includes the information carried on the physical broadcast channel (PBCH), and the cyclic redundancy code (CRC) of the information carried on the PBCH is obtained by means of calculation in a first calculation manner, the CRC is obtained by means of calculation in the first calculation manner and is used to instruct the base station to send the system message by using the second space resource.

For example, the information carried on the PBCH remains unchanged. CRCs are calculated in different CRC calculation manners to obtain different CRCs, and the UE is implicitly notified whether the beam needs to send an SIB. The UE obtains the CRCs in different CRC calculation manners, and performs check on data carried on a received PBCH. For example, it is specified that CRC calculation manners of the data carried on the PBCH include a manner 1 and a manner 2. When blindly detecting the PBCH, the UE performs CRC calculation on received information in the CRC calculation manner 1 and the CRC calculation manner 2, and compares a calculation result with a received CRC. If correct CRC check is detected in the calculation manner 1, it is considered that the beam does not need to send an SIB; or if correct CRC check is detected in the calculation manner 2, it is considered that the beam needs to send an SIB.

Optionally, the first synchronization signal includes a primary synchronization signal PSS and/or a secondary synchronization signal SSS. Alternatively, different sequences of the PSS and the SSS may be used to indicate whether an SIB needs to be sent or whether a beam is valid.

The PSS is a first sequence and is used to instruct the base station to send the system message by using the second space resource;
or
the SSS is a second sequence and is used to instruct the base station to send the system message by using the second space resource.

For example, a sequence used by the PSS is different from a sequence used by the SSS. The UE is implicitly notified whether the beam needs to send an SIB. The UE detects the PSS/SSS according to different sequences. For example, it is specified that the PSS/SSS may separately use a sequence 1 and a sequence 2. If the UE detects a PSS/SSS that uses the sequence 1, it is considered that the beam does not need to send an SIB; or if the UE detects a PSS/SSS that uses the sequence 2, it is considered that the beam needs to send an SIB.

In another implementation, the base station may carry indication information in a first signal set sent on a valid beam fed back by the UE in a previous period. Specifically, the method includes:
sending, by the base station, N third signal sets to the UE, where one third signal set is sent on each first space resource, that is, the N third signal sets are sent on N outer loop beams, and the third signal set includes a PSS/SSS, an MIB, and the like;
receiving, by the base station, Z response signals sent by the UE, where each response signal includes indication information of a space resource on which the third signal set is to be sent, Z is a positive integer, and Z is less than or equal to N, that is, the Z response signals indicate that UE exists on Z corresponding valid beams;
sending, by the base station, M fourth signal sets according to the Z response signals, where one fourth signal set is sent on each second space resource; that is, the base station sends the fourth signal sets on M valid beams on which UE exists, the fourth signal set includes a PSS/SSS of a corresponding valid beam, an MIB, and an SIB, and the UE accesses a network according to the SIB;
determining, by the base station, M second space resources according to the Z response signals, where the Z response signals indicate that beams corresponding to the Z response signals are valid beams, and therefore, the base station may determine that indication information may be included in first signal sets of M beams;
sending, by the base station, N first signal sets, where one first signal set is sent on each first space resource, M first signal sets in the N first signal sets are second signal sets, and each of the M second signal sets includes indication information, where the indication information is used to indicate that system messages are to be sent on M second space resources, or the indication information is used to indicate that M first space resources on which the second signal sets are to be sent are valid space resources, M and N are positive integers, and M is less than or equal to N; that is, when sending the first signal sets, the base station adds indication information to the M first signal sets in the N first signal sets, so as to indicate that a corresponding beam is a valid beam or the beam needs to send an SIB; and
sending, by the base station, M system messages on the M second space resources, where the M system messages are used to instruct user equipment (UE) to access a network; that is, the base station separately sends an SIB on M valid beams, and in this way, the UE may directly determine, according to the indication information, that an SIB exists on the beam, so as to obtain an SIB to access the network.

This implementation of the present disclosure provides a radio access method, including: sending, by a base station, N first signal sets, where one first signal set is sent on each first space resource, M first signal sets in the N first signal sets are second signal sets, each of the M second signal sets includes indication information, the indication information is used to indicate that system messages are to be sent on M second space resources, or the indication information is used to indicate that M first space resources on which the second signal sets are to be sent are valid space resources, M and N are positive integers, and M is less than or equal to N; and sending, by the base station, M system messages on the M second space resources, where the M system messages are used to instruct user equipment (UE) to access a network. In this way, by sending the first signal sets on a plurality of resources, a relatively large quantity of UEs in narrow beam transmission may be synchronized with the base station in time. In addition, the indication information is used to instruct the base station to send the system message, so that the UE may access the network in time, and the system message is sent more effectively. This saves second space resources, and avoids interference that occurs when the system message is sent on an invalid second space resource.

Correspondingly, for the UE, to access the network in time, this implementation of the present disclosure provides a radio access method, including:
receiving, by the UE, M second signal sets sent by a base station, where the M second signal sets are M first signal sets in N first signal sets sent by the base station, one first signal set is sent on each first space resource, and each of the M second signal sets includes indication information, where
the indication information is used to indicate that system messages are to be sent on M second space resources, or the indication information is used to indicate that M first space resources on which the second signal sets are to be sent are valid space resources, where M and N are positive integers, and M is less than or equal to N; and
receiving, by the UE, the system message on the second space resource according to the indication information, so as to access a network according to the system message; that is, when identifying the first signal set carrying the indication information, the UE may directly receive the system message on the second space resource according to the indication information, so as to establish an RRC connection to the network according to the system message.

In this way, first signal sets are sent on a plurality of resources, and a relatively large quantity of UEs may be synchronized with a base station in time. The first signal set includes the indication information that is used to instruct the base station to send the system message on the M second space resources, or is used to indicate that the M first space resources are valid space resources. As a result, the system message is sent more effectively, and second space resources are saved. In addition, the UE can access the network in time according to the system message with no need to detect the second space resource, and this avoids interference that occurs when the system message is sent on an invalid second space resource.

Optionally, before the receiving, by user equipment UE, M second signal sets, the method further includes:
receiving, by the UE, third signal sets sent by the base station, where one third signal set is sent on each first space resource; and
feeding back, by the UE, response signals to the base station according to the received third signal sets, where the response signal includes indication information of a space resource on which the third signal set is to be sent.

That is, the indication information that is in the second signal set and that is received by the UE may be determined according to interaction between the base station and the UE. After receiving the third signal sets sent by the base station in the first space resources, the UE feeds back the response signal to the base station, so that the base station learns that the UE exists on the first space resource corresponding to the received response signal. To send the system message on a space resource indicated by the indication information included in the feedback signal, the following step needs to be performed: When the UE receives the M second signal sets, the base station sends the second signal set on a first space resource indicated by the indication information included in the third signal set, that is, the base station is instructed to send the system message on a valid first space resource indicated by the indication information, that is, a second space resource.

According to the claimed invention, system message includes a system information block SIB 1, with which the UE initiates access according to an RACH resource indicated in the system message, and establishes an RRC connection to a cell.

The first signal set includes a first synchronization signal and/or a first broadcast signal.

The indication information included in the foregoing first signal set may be carried on the following manner. For a specific implementation, refer to the foregoing implementation. Details are not described herein again.

Optionally, the first broadcast signal includes information carried on a physical broadcast channel (PBCH).

The information carried on the PBCH includes an indication information field that is used to instruct the base station to send the system message by using the second space resource.

Optionally, the first broadcast signal includes the information carried on the physical broadcast channel (PBCH).

The information carried on the PBCH is scrambled by using a first scrambling code and is used to instruct the base station to send the system message by using the second space resource.

Optionally, the first broadcast signal includes the information carried on the physical broadcast channel (PBCH), a cyclic redundancy code (CRC) of the information carried on the PBCH is a first mask, and the first mask is used to instruct the base station to send the system message by using the second space resource.

Optionally, the first broadcast signal includes the information carried on the physical broadcast channel (PBCH), and the cyclic redundancy code (CRC) of the information carried on the PBCH is obtained by means of calculation in a first calculation manner, the CRC is obtained by means of calculation in the first calculation manner and is used to instruct the base station to send the system message by using the second space resource.

Optionally, the first synchronization signal includes a primary synchronization signal PSS and/or a secondary synchronization signal SSS.

The PSS is a first sequence and is used to instruct the base station to send the system message by using the second space resource;
or
the SSS is a second sequence and is used to instruct the base station to send the system message by using the second space resource.

This implementation of the present disclosure provides a radio access method, including: receiving, by UE, M second signal sets sent by a base station, where the M second signal sets are M first signal sets in N first signal sets sent by the base station, one first signal set is sent on each first space resource, and each of the M second signal sets includes indication information. In this way, by receiving the first signal sets sent by the base station on a plurality of resources, the UE may be synchronized with the base station in time. The indication information in the second signal sets is used to instruct the base station to send M system messages on the M second space resources, or indicate to the base station that the M first space resources are valid space resources, so that the UE accesses the base station in time after being synchronized.

A quantity of UEs in a cell is relatively large, and therefore, a quantity of valid first space resources (inner loop beams) is large. A double-loop inner loop beam scanning basically includes all beams, and approximately all the beams need to be used to send synchronization signals, broadcast signals, system message, and the like, which leads to large system overheads. In addition, beams used to send a signal and a message in an outer loop highly overlap with those in an inner loop, and some signals carried on a same beam overlap, which causes more extra overheads.

Specifically, a discovery subframe of outer loop beam scanning carries PSSs/SSSs and PBCH channels of all the beams. As shown in FIG. 6, every two symbols in the discovery subframe carry a PSS/SSS and PBCH channel of one beam. In addition, a beam switching point exists between symbols of different beams. A synchronization subframe of inner loop beam scanning carries a PSS/SSS and a PBCH channel of a valid beam. A carrying manner is shown in FIG. 7. A channel of the valid beam is carried on the last two downlink symbols of an inner loop synchronization subframe, and each inner loop synchronization subframe carries a PSS/SSS and a PBCH channel of only one beam.

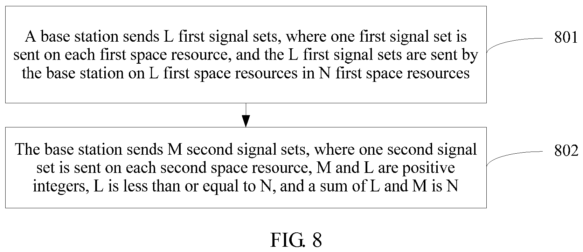

In addition to resolving a problem that user equipment accesses a network in time in narrow beam transmission, to reduce system overheads of the outer loop beam scanning, an implementation of the present disclosure provides a radio access method. As shown in FIG. 8, the method includes the following steps. This method is provided as an illustrative example not claimed in the present application.

801. Abase station sends L first signal sets, where one first signal set is sent on each first space resource, and the L first signal sets are sent by the base station on L first space resources in N first space resources.

N first signal sets on the N first space resources are configured at N different time-frequency resource locations. That the base station sends the L first signal sets may include: sending, by the base station by using the L first space resources, the first signal sets at time-frequency resource locations corresponding to the L first signal sets.

802. The base station sends M second signal sets, where one second signal set is sent on each second space resource, M and L are positive integers, L is less than or equal to N, and a sum of L and M is N.

In this way, by sending the first signal sets on a plurality of resources, a relatively large quantity of UEs may be synchronized with the base station in time. Further, the L first signal sets are sent on the L first space resources in the N first space resources, and one first signal set is sent on each first space resource. Then, second signal sets are sent on remaining M second space resources of the N first space resources, and one second signal set is sent on each second space resource. In this way, if a quantity of UEs in a cell is relatively large, a quantity of valid beams is large, and almost all beams need to be used to send synchronization signals, broadcast signals, system message, and the like during the outer loop beam scanning and the inner loop beam scanning. That is, if signal content included in the first signal set is almost the same as signal content included in the second signal set, not signals of all the beams need to be sent during the outer loop beam scanning, and a second signal set will be sent on a remaining beam on which a first signal set is not sent during the outer loop beam scanning. This may reduce system overheads of the first space resource during the outer loop beam scanning.

A first signal set may include a PSS/SSS and a PBCH, and a second signal set may include a PSS/SSS, a PBCH, and an SIB.

Optionally, before the base station sends the L first signal sets, the method further includes:
determining, by the base station, the L first space resources according to a preset rule. For example, L first space resources may be randomly selected to send the first signal sets.

That is, if the outer loop beam scanning and the inner loop beam scanning cover almost all the beams, the base station may determine, according to the preset rule, to send the first signal sets on L beams of the N first space resources, and to send the second signal sets on remaining M beams.

Optionally, the method may further include:
determining, by the base station according to response signals fed back by UE for the L first signal sets and response signals fed back for the M second signal sets, first space resources on which the first signal sets are to be sent and second space resources on which the second signal sets are to be sent in a next time period.

Specifically, the base station receives P response signals fed back by the UE for the L first signal sets, where each response signal includes first indication information of a first space resource on which the first signal set is to be sent, P is a positive integer, and 1 ≤ P ≤ L.

The base station receives Y response signals fed back by the UE for the M second signal sets, where each response signal includes second indication information of a second space resource on which the second signal set is to be sent, Y is a positive integer, and 1 ≤ Y ≤ M.

The base station sends L' first signal sets on L' first space resources according to the P response signals and the Y response signals, where the first space resources corresponding to the L' first signal sets are space resources other than a first space resource indicated by the first indication information and a second space resource indicated by the second indication information, L' is a positive integer, and L' is greater than or equal to 1 and is less than or equal to N.

The base station sends M' second signal sets on M' second space resources, where M' is a positive integer, and a sum of L' and M' is N.

That is, the base station may correspondingly determine a first space resource of the outer loop beam scanning according to a user in a previous time period, for example, a previous period. Further, a second space resource of the inner loop beam scanning belongs to a remaining beam other than beams used for the outer loop beam scanning on the N first space resources. The reason is that in a beam scanning period or between two scanning periods, UEs on different beams may change. For example, UE on a beam moves to a coverage area of another beam.

That is, to reduce outer loop system overheads, when a beam is a valid beam in an outer loop beam scanning period, a PSS/SSS and a PBCH of the beam no longer exist in a discovery subframe of next outer loop beam scanning, but exist only in a synchronization subframe of inner loop beam scanning. For a PSS/SSS and a PBCH of a same beam, the outer loop beam scanning and the inner loop beam scanning have no difference in achieving synchronization and obtaining an MIB for the UE. Therefore, the UE may achieve synchronization and obtain the MIB when receiving an outer loop discovery subframe of a same beam or receiving a PSS/SSS and a PBCH carried on an inner loop synchronization subframe, and feed back beam information to the base station based on a channel detected on the beam. In this way, first signal sets may be sent on a plurality of resources, so that a relatively large quantity of UEs may be synchronized with the base station in time; in addition, system overheads of a PSS/SSS and a PBCH of the outer loop beam scanning may be reduced.

It may be understood that to reduce the system overheads, alternatively, a determined invalid beam may need not to carry an SIB during the outer loop beam scanning, and an SIB is carried only on a valid beam.

It should be noted that when all the beams are opened or closed, that is, all the beams are used to send signal sets or none of them is used to send the signal sets, a double loop may degrade into a single loop. When some beams are opened, the double loop is formed.

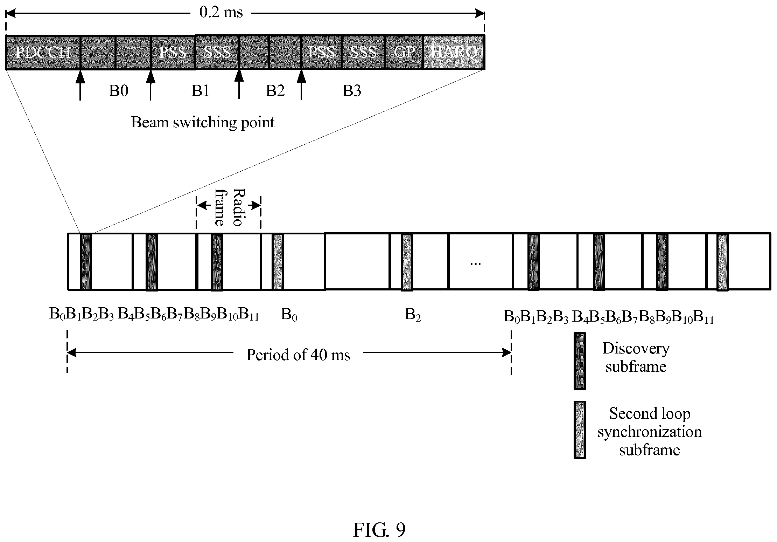

As shown in FIG. 9, in B0-B3, B0 and B2 are valid beams, and therefore, channels of B0 and B2 do not exist on the outer loop beam scanning, and UE belonging to B0 and B2 achieves synchronization and obtains a PBCH by detecting B0 and B2 of the inner loop beam scanning. In an extreme case, when BO-B 11 are valid beams, only the inner loop beam scanning is performed, the outer loop beam scanning is not performed, and the double loop degrades into the single loop. The UE directly receives a PSS/SSS, a PBCH, and an SIB of a corresponding beam obtained after the inner loop beam scanning, and feeds back beam information to the base station based on a channel detected on the beam.

In this implementation of the present disclosure, by sending the first signal sets on a plurality of resources, different beams serve users in a cell at different times. In addition, common channels such as a broadcast channel and a synchronization channel on each beam cover all users in the cell, so that users in the cell achieve synchronization and obtain a system message, and a relatively large quantity of UEs may be synchronized with the base station in time and access the cell. Further, the first signal sets are sent on the L first space resources in all first space resources of a first cell, the second signal sets are sent on remaining M second space resources, and system overheads of a PSS/SSS and a PBCH of the outer loop beam scanning may be reduced.

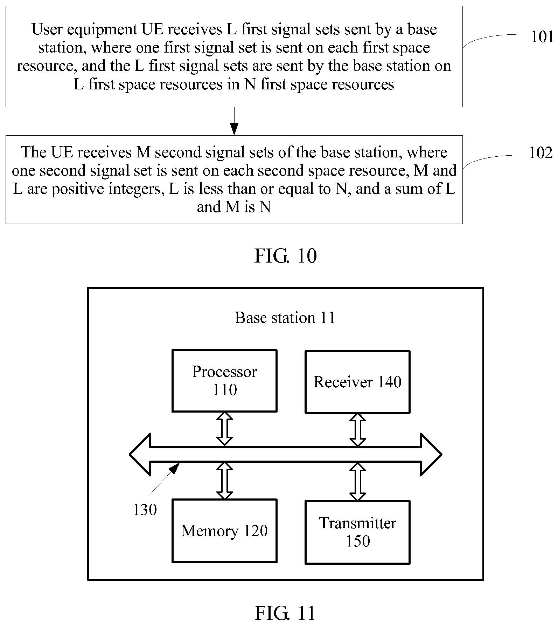

Correspondingly, for a UE side, an implementation of the present disclosure provides a radio access method. As shown in FIG. 10, the method includes the following steps. This method is provided as an illustrative example not claimed in the present application.

101. User equipment (UE) receives L first signal sets sent by a base station, where one first signal set is sent on each first space resource, and the L first signal sets are sent by the base station on L first space resources in N first space resources.

102. The UE receives M second signal sets sent by the base station, where one second signal set is sent on each second space resource, M and L are positive integers, L is less than or equal to N, and a sum of L and M is N.

N first signal sets on the N first space resources are configured at N different time-frequency resource locations.

That the UE receives the L first signal sets sent by the base station includes:
receiving, by the UE, the first signal sets sent by the base station by using the L first space resources on time-frequency resources corresponding to the L first signal sets.

Optionally, the method may further include:
feeding back, by the UE, a first response signal to the base station according to the received first signal sets, where the first response signal includes indication information of a first space resource on which the first signal set is to be sent; and
feeding back, by the UE, a second response signal to the base station according to the received second signal sets, where the second response signal includes indication information of a second space resource on which the second signal set is to be sent.

For a specific implementation of the UE in this implementation of the present disclosure, refer to detailed description shown in FIG. 8. Details are not described herein again.

In this implementation of the present disclosure, by sending the first signal sets on a plurality of resources, different beams serve users in a cell at different times. In addition, common channels such as a broadcast channel and a synchronization channel on each beam cover all users in the cell, so that users in the cell achieve synchronization and obtain a system message, and a relatively large quantity of UEs may be synchronized with the base station in time and access the cell. Further, the first signal sets are sent on the L first space resources in all first space resources of a first cell, the second signal sets are sent on remaining M second space resources, and system overheads of a PSS/SSS and a PBCH of outer loop beam scanning may be reduced.

According to the method provided in the implementations of the present disclosure, as shown in FIG. 11, an implementation of the present disclosure further provides a base station 11, including a processor 110, a memory 120, a system bus 130, a receiver 140, and a transmitter 150. The memory 120 is configured to store an instruction. The processor 110 is configured to execute the instruction stored in the memory 120, so as to control the receiver 140 to receive a signal and control the transmitter 150 to send a signal, so as to complete the steps in the foregoing radio access method. The receiver 140 and the transmitter 150 may be a same physical entity or different physical entities. When the receiver 140 and the transmitter 150 are the same physical entity, the receiver 140 and the transmitter 150 may be collectively referred to as a transceiver.

Steps may include at least the following: sending, by a base station, N first signal sets, where one first signal set is sent on each first space resource, M first signal sets in the N first signal sets are second signal sets, and each of the M second signal sets includes indication information, where the indication information is used to indicate that system messages are to be sent on M second space resources, or the indication information is used to indicate that M first space resources on which the second signal sets are to be sent are valid space resources, M and N are positive integers, and M is less than or equal to N; and
sending, by the base station, M system messages on the M second space resources, where the M system messages are used to instruct user equipment (UE) to access a network.

Optionally, before the sending, by a base station, N first signal sets, the steps further include:
determining, by the base station according to a preset rule, the M first space resources on which the M first signal sets including the indication information are sent.

Optionally, before the sending, by a base station, N first signal sets, the steps may further include:
sending, by the base station, N third signal sets to the UE, where one third signal set is sent on each first space resource;
receiving, by the base station, Z response signals sent by the UE, where each response signal includes indication information of a space resource on which the third signal set is to be sent, Z is a positive integer, and Z is less than or equal to N;
sending, by the base station, M fourth signal sets according to the Z response signals, where one fourth signal set is sent on each second space resource; and
determining, by the base station, the M second space resources according to the Z response signals.

The system message includes a system information block SIB 1.

The first signal set includes a first synchronization signal and/or a first broadcast signal.

Optionally, the first broadcast signal includes information carried on a physical broadcast channel (PBCH).

The information carried on the PBCH includes an indication information field that is used to instruct the base station to send the system message by using the second space resource.

Optionally, the first broadcast signal includes the information carried on the physical broadcast channel (PBCH).

The information carried on the PBCH is scrambled by using a first scrambling code and is used to instruct the base station to send the system message by using the second space resource.

Optionally, the first broadcast signal includes the information carried on the physical broadcast channel (PBCH), a cyclic redundancy code (CRC) of the information carried on the PBCH is a first mask, and the first mask is used to instruct the base station to send the system message by using the second space resource.

Optionally, the first broadcast signal includes the information carried on the physical broadcast channel (PBCH), and the cyclic redundancy code (CRC) of the information carried on the PBCH is obtained by means of calculation in a first calculation manner, the CRC is obtained by means of calculation in the first calculation manner and is used to instruct the base station to send the system message by using the second space resource.

Optionally, the first synchronization signal includes a primary synchronization signal PSS and/or a secondary synchronization signal SSS.

The PSS is a first sequence and is used to instruct the base station to send the system message by using the second space resource;
or
the SSS is a second sequence and is used to instruct the base station to send the system message by using the second space resource.

In an implementation, functions of the receiver 140 and the transmitter 150 may be implemented by using a transceiver circuit or a dedicated transceiver chip. The processor 110 may be considered to be implemented by using a dedicated processing chip, processing circuit, or processor or a universal chip.

For concepts, explanation, detailed description, and other steps that are related to the technical solution provided in this implementation of the present disclosure and that are used in the base station, refer to the foregoing method or description about the content in another implementation. Details are not described herein again.

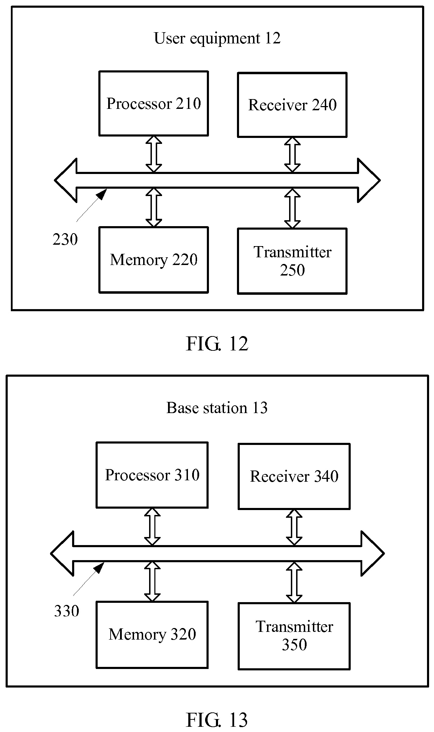

According to the method provided in the implementations of the present disclosure, as shown in FIG. 12, an implementation of the present disclosure further provides user equipment 12, including a processor 210, a memory 220, a system bus 230, a receiver 240, and a transmitter 250. The processor 210, the memory 220, the receiver 240, and the transmitter 250 are connected to each other by using the system bus 230. The memory 220 is configured to store an instruction. The processor 210 is configured to execute the instruction stored in the memory 220 to control the receiver 240 to receive a signal and control the transmitter 250 to send a signal, so as to complete the steps in the foregoing radio access method. The receiver 240 and the transmitter 250 may be a same physical entity or different physical entities. When the receiver 240 and the transmitter 250 are the same physical entity, the receiver 240 and the transmitter 250 may be collectively referred to as a transceiver.

Steps may include at least the following: receiving, by user equipment UE, M second signal sets sent by a base station, where the M second signal sets are M first signal sets in N first signal sets sent by the base station, one first signal set is sent on each first space resource, and each of the M second signal sets includes indication information, where
the indication information is used to indicate that system messages are to be sent on M second space resources, or the indication information is used to indicate that M first space resources on which the second signal sets are to be sent are valid space resources, where M and N are positive integers, and M is less than or equal to N; and
receiving, by the UE, the system message on the second space resource according to the indication information, so as to access a network according to the system message.

Optionally, before the receiving, by user equipment UE, M second signal sets, the steps may further include:
receiving, by the UE, third signal sets sent by the base station, where one third signal set is sent on each first space resource; and
feeding back, by the UE, response signals to the base station according to the received third signal sets, where the response signal includes indication information of a space resource on which the third signal set is to be sent.

The system message includes a system information block SIB 1.

The first signal set includes a first synchronization signal and/or a first broadcast signal.

Optionally, the first broadcast signal includes information carried on a physical broadcast channel (PBCH).

The information carried on the PBCH includes an indication information field that is used to instruct the base station to send the system message by using the second space resource.

Optionally, the first broadcast signal includes the information carried on the physical broadcast channel (PBCH).

The information carried on the PBCH is scrambled by using a first scrambling code and is used to instruct the base station to send the system message by using the second space resource.

Optionally, the first broadcast signal includes the information carried on the physical broadcast channel (PBCH), a cyclic redundancy code (CRC) of the information carried on the PBCH is a first mask, and the first mask is used to instruct the base station to send the system message by using the second space resource.

Optionally, the first broadcast signal includes the information carried on the physical broadcast channel (PBCH), and the cyclic redundancy code (CRC) of the information carried on the PBCH is obtained by means of calculation in a first calculation manner, the CRC is obtained by means of calculation in the first calculation manner and is used to instruct the base station to send the system message by using the second space resource.

Optionally, the first synchronization signal includes a primary synchronization signal PSS and/or a secondary synchronization signal SSS.

The PSS is a first sequence and is used to instruct the base station to send the system message by using the second space resource;
or
the SSS is a second sequence and is used to instruct the base station to send the system message by using the second space resource.

In an implementation, functions of the receiver 240 and the transmitter 250 may be considered to be implemented by using a transceiver circuit or a dedicated transceiver chip. The processor 210 may be considered to be implemented by using a dedicated processing chip, processing circuit, or processor or a universal chip.

For concepts, explanation, detailed description, and other steps that are related to the technical solution provided in this implementation of the present disclosure and that are used in the user equipment, refer to the foregoing method or description about the content in another implementation. Details are not described herein again.

According to the method provided in the implementations of the present disclosure, as shown in FIG. 13, which is provided as an illustrative example not claimed in the present application, an implementation of the present disclosure further provides a base station 13, including a processor 310, a memory 320, a system bus 330, a receiver 340, and a transmitter 350. The processor 310, the memory 320, the receiver 340, and the transmitter 350 are connected to each other by using the system bus 330. The memory 320 is configured to store an instruction. The processor 310 is configured to execute the instruction stored in the memory 320 to control the receiver 340 to receive a signal and control the transmitter 350 to send a signal, so as to complete the steps in the foregoing radio access method. The receiver 340 and the transmitter 350 may be a same physical entity or different physical entities. When the receiver 340 and the transmitter 350 are the same physical entity, the receiver 340 and the transmitter 350 may be collectively referred to as a transceiver.

Steps may include at least the following: sending L first signal sets, where one first signal set is sent on each first space resource, and the L first signal sets are sent by the base station on L first space resources in N first space resources; and
sending, by the base station, M second signal sets, where one second signal set is sent on each second space resource, M and L are positive integers, L is less than or equal to N, and a sum of L and M is N.

N first signal sets on the N first space resources are configured at N different time-frequency resource locations.

The step of sending, by the base station, the L first signal sets may include:
sending, by the base station by using the L first space resources, the first signal sets at time-frequency resource locations corresponding to the L first signal sets.

Optionally, before the base station sends the L first signal sets on the L first space resources in the N first space resources of a first cell, the step further includes:
determining, by the base station, the L first space resources according to a preset rule.

Optionally, the method further includes:
determining, by the base station according to response signals fed back by user equipment (UE) for the L first signal sets and response signals fed back for the M second signal sets, first space resources on which the first signal sets are to be sent and second space resources on which the second signal sets are to be sent in a next time period.

Optionally, the determining, by the base station according to response signals fed back by user equipment (UE) for the L first signal sets and response signals fed back for the M second signal sets, first space resources on which the first signal sets are to be sent and second space resources on which the second signal sets are to be sent in a next period includes:
receiving, by the base station, P response signals fed back by the UE for the L first signal sets, where each response signal includes first indication information of a first space resource on which the first signal set is to be sent, P is a positive integer, and 1 ≤ P ≤ L;
receiving, by the base station, Y response signals fed back by the UE for the M second signal sets, where each response signal includes second indication information of a second space resource on which the second signal set is to be sent, Y is a positive integer, and 1 ≤ Y ≤ M;
sending, by the base station, L' first signal sets on L' first space resources according to the P response signals and the Y response signals, where the first space resources corresponding to the L' first signal sets are space resources other than a first space resource indicated by the first indication information and a second space resource indicated by the second indication information, L' is a positive integer, and L' is greater than or equal to 1 and is less than or equal to N; and
sending, by the base station, M' second signal sets on M' second space resources, where M' is a positive integer, and a sum of L' and M' is N.

In an implementation, functions of the receiver 340 and the transmitter 350 may be considered to be implemented by using a transceiver circuit or a dedicated transceiver chip. The processor 310 may be considered to be implemented by using a dedicated processing chip, processing circuit, or processor or a universal chip.

For concepts, explanation, detailed description, and other steps that are related to the technical solution provided in this implementation of the present disclosure and that are used in the base station, refer to the foregoing method or description about the content in another implementation. Details are not described herein again.

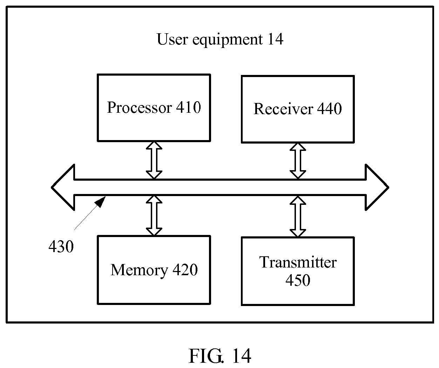

According to the method provided in the implementations of the present disclosure, as shown in FIG. 14, which is provided as an illustrative example not claimed in the present application, an implementation of the present disclosure further provides user equipment 14, including a processor 410, a memory 420, a system bus 430, a receiver 440, and a transmitter 450. The processor 410, the memory 420, the receiver 440, and the transmitter 450 are connected to each other by using the system bus 430. The memory 420 is configured to store an instruction. The processor 410 is configured to execute the instruction stored in the memory 420 to control the receiver 440 to receive a signal and control the transmitter 450 to send a signal, so as to complete the steps in the foregoing radio access method. The receiver 440 and the transmitter 450 may be a same physical entity or different physical entities. When the receiver 440 and the transmitter 450 are the same physical entity, the receiver 440 and the transmitter 450 may be collectively referred to as a transceiver.

Steps may include at least the following: receiving, by UE, L first signal sets sent by a base station, where one first signal set is sent on each first space resource, and the L first signal sets are sent by the base station on L first space resources in N first space resources; and
receiving, by the UE, M second signal sets sent by the base station, where one second signal set is sent on each second space resource, M and L are positive integers, L is less than or equal to N, and a sum of L and M is N.

N first signal sets on the N first space resources are configured at N different time-frequency resource locations.

That the UE receives the L first signal sets sent by the base station on the L first space resources in the N first space resources of a first cell includes:
receiving, by the UE, the first signal sets sent by the base station by using the L first space resources on time-frequency resources corresponding to the L first signal sets.

Optionally, the steps may further include:
feeding back, by the UE, a first response signal to the base station according to the received first signal sets, where the first response signal includes indication information of a first space resource on which the first signal set is to be sent; and
feeding back, by the UE, a second response signal to the base station according to the received second signal sets, where the second response signal includes indication information of a second space resource on which the second signal set is to be sent.

For concepts, explanation, detailed description, and other steps that are related to the technical solution provided in this implementation of the present disclosure and that are used in the UE, refer to the foregoing method or description about the content in another implementation. Details are not described herein again.

According to the method provided in the implementations of the present disclosure, an implementation of the present disclosure further provides a communications system, which includes the foregoing base station and one or more UEs.

It should be understood that in the implementations of the present disclosure, a processor 110, 210, 310, or 410 may be a central processing unit (Central Processing Unit, "CPU" for short). Alternatively, the processor may be another general-purpose processor, a digital signal processor (DSP), an application-specific integrated circuit (ASIC), a field programmable gate array (FPGA) or another programmable logic device, a discrete gate, a transistor logic device, a discrete hardware component, or the like. The general-purpose processor may be a microprocessor, or the processor may be any conventional processor, or the like.

A memory 120, 220, 320, or 420 may include a read-only memory and a random access memory, and provides an instruction and data for the processor. A part of the memory may further include a nonvolatile random access memory. For example, the memory may further store information about a device type.

In addition to a data bus, a system bus 130, 230, 330, or 430 may further include a power bus, a control bus, a status signal bus, and the like. However, for clarity of description, various buses are marked as the system bus in the figures.

In an implementation process, the steps in the foregoing methods may be completed by using an integrated logic circuit of hardware in the processor 110, 210, 310, or 410, or an instruction in a form of software. The steps of the method disclosed with reference to the implementations of the present disclosure may be directly performed by a hardware processor, or may be performed by using a combination of hardware in the processor and a software module. The software module may be located in a mature storage medium in the field, such as a random access memory, a flash memory, a read-only memory, a programmable read-only memory, an electrically-erasable programmable memory, or a register. The storage medium is located in the memory, and the processor reads information in the memory and completes the steps in the foregoing method in combination with the hardware in the processor. To avoid repetition, details are not described herein again.

It may be clearly understood by a person skilled in the art that for the purpose of convenient and brief description, for a detailed working process of the foregoing terminal, reference may be made to a corresponding process in the foregoing method implementations, and details are not described herein again.

In the several implementations provided in this application, it should be understood that the disclosed device and method may be implemented in other manners. For example, the described device implementation is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In addition, functional units in the devices and systems in the implementations of the present disclosure may be integrated into one processing unit, or each of the units may exist alone physically, or two or more units are integrated into one unit. The units may be implemented in a form of hardware, or may be implemented in a form of hardware in addition to a software functional unit.

All or some of the steps of the method implementations may be implemented by a program instructing relevant hardware. The program may be stored in a computer-readable storage medium. When the program runs, the steps of the method implementations are performed. The foregoing storage medium includes: any medium that can store program code, such as a USB flash drive, a removable hard disk, a read-only memory (Read Only Memory, ROM for short), a random access memory (Random Access Memory, RAM for short), a magnetic disk, or an optical disc.

The scope of protection shall be defined by the appended claims.

## Claims

1. A radio access method, comprising:
sending (501), by a base station, N first signal sets, wherein one first signal set is sent on each first space resource, M first signal sets in the N first signal sets are second signal sets, and each of the M second signal sets comprises indication information, wherein:
the indication information is used to indicate that system messages are to be sent on M second space resources,, wherein M and N are positive integers, and M is less than or equal to N; and
sending, by the base station, M system messages on the M second space resources, wherein the system message comprises a system information block, SIB 1 which are used for user equipment, UE, to initiate access according to an RACH resource indicated in the system message ;
wherein the second signal set comprises a first broadcast signal, and the first broadcast signal comprises information carried on a physical broadcast control channel PBCH, and the information carried on the PBCH comprises the indication information, the indication information is an indication information field that is used to indicate that the system message is to be sent on the second space resource.

2. The method according to claim 1, wherein before the sending, by the base station, N first signal sets, the method comprises:
determining, by the base station, the M first space resources of the M first signal sets according to a preset rule.

3. The method according to claim 1, wherein before the sending, by the base station, N first signal sets, the method comprises:
sending, by the base station, N third signal sets to the UE, wherein one third signal set is sent on each first space resource;
receiving, by the base station, Z response signals sent by the UE, wherein each response signal comprises indication information of a space resource on which the third signal set is to be sent, Z is a positive integer, and Z is less than or equal to N;
sending, by the base station, M fourth signal sets according to the Z response signals, wherein one fourth signal set is sent on each second space resource; and
determining, by the base station, the M second space resources according to the Z response signals.

4. A radio access method, wherein the method comprises:
receiving, by user equipment, UE, M second signal sets sent by a base station, wherein the M second signal sets are M first signal sets in N first signal sets sent by the base station, one first signal set is sent on each first space resource, and each of the M second signal sets comprises indication information, wherein
the indication information is used to indicate that system messages are to be sent on M second space resources, wherein M and N are positive integers, and M is less than or equal to N; and
receiving, by the UE, the system message on the second space resource according to the indication information, the system message comprises a system information block, SIB 1 which are used to initiate access according to an RACH resource indicated in the system message;
wherein the second signal set comprises a first broadcast signal, and the first broadcast signal comprises information carried on a physical broadcast control channel PBCH, and the information carried on the PBCH comprises the indication information, the indication information is an indication information field that is used to indicate that the system message is to be sent on the second space resource.

5. The method according to claim 4, wherein before the receiving, by the UE, M second signal sets, the method further comprises:
receiving, by the UE, third signal sets sent by the base station, wherein one third signal set is sent on each first space resource; and
feeding back, by the UE, response signals to the base station according to the received third signal sets, wherein the response signal comprises indication information of a space resource on which the third signal set is to be sent.

6. A base station (11), comprising a processor (110), a memory (120), and a transceiver (140, 150), wherein:
the memory is configured to store an instruction; and the processor is configured to execute the instruction stored in the memory to control the transceiver to receive and send signals, and when the processor executes the instruction stored in the memory, the base station is configured to perform the method according to any one of claims 1 to 3.

7. User equipment, UE (12), comprising a processor (210), a memory (220), and a transceiver (240, 250), wherein:
the memory is configured to store an instruction; and the processor is configured to execute the instruction stored in the memory to control the transceiver to receive and send signals, and when the processor executes the instruction stored in the memory, the base station is configured to perform the method according to any one of claims 4 to 5.

8. A radio access device, applied to a communication device and comprising units configured to perform the steps according to any one of claims 1 to 3.

9. A radio access device, applied to a communication device and comprising units configured to perform the steps according to any one of claims 4 to 5.

10. A computer-readable storage medium comprising instructions which, when executed by a computer, comprised in a terminal device, cause the computer to carry out the method according to any one of claims 1 to 3.

11. A computer-readable storage medium comprising instructions which, when executed by a computer, comprised in a terminal device, cause the computer to carry out the method according to any one of claims 4 to 5.

## Patentansprüche

1. Funkzugriffsverfahren, umfassend:
Senden (501), durch eine Basisstation, von N ersten Signalsätzen, wobei ein erster Signalsatz auf jeder ersten Platzressource gesendet wird, M erste Signalsätze in den N ersten Signalsätzen zweite Signalsätze sind und jeder der M zweiten Signalsätze eine Anzeigeinformation umfasst, wobei:
die Anzeigeinformation verwendet wird, um anzuzeigen, dass Systemnachrichten auf M zweiten Platzressourcen gesendet werden sollen, wobei M und N positive ganze Zahlen sind und M kleiner oder gleich N ist; und
Senden, durch die Basisstation, von M Systemnachrichten auf den M zweiten Platzressourcen, wobei die Systemnachricht einen Systeminformationsblock (System Information Block, SIB) 1 umfasst, der für das Benutzergerät (User Equipment, UE) verwendet wird, um den Zugriff gemäß einer in der Systemnachricht angezeigten RACH-Ressource einzuleiten;
wobei der zweite Signalsatz ein erstes Rundfunksignal umfasst und das erste Rundfunksignal eine Information umfasst, die auf einem physischen Rundfunksteuerkanal (Physical Broadcast Control Channel, PBCH) getragen wird,
und die Information, die auf dem PBCH getragen wird, die Anzeigeinformation umfasst, wobei die Anzeigeinformation ein Anzeigeinformationsfeld ist, das verwendet wird, um anzuzeigen, dass die Systemnachricht auf der zweiten Platzressource gesendet werden soll.

2. Verfahren nach Anspruch 1, wobei das Verfahren, vor dem Senden durch die Basisstation, von N ersten Signalsätzen umfasst:
Bestimmen, durch die Basisstation, der M ersten Platzressourcen der M ersten Signalsätze gemäß einer voreingestellten Regel.

3. Verfahren nach Anspruch 1, wobei das Verfahren, vor dem Senden durch die Basisstation, von N ersten Signalsätzen umfasst:
Senden, durch die Basisstation, von N dritten Signalsätzen an das UE, wobei ein dritter Signalsatz auf jeder ersten Platzressource gesendet wird;
Empfangen, durch die Basisstation, von Z Antwortsignalen, die von dem UE gesendet werden, wobei jedes Antwortsignal eine Anzeigeinformation einer Platzressource umfasst, auf der der dritte Signalsatz gesendet werden soll, Z eine positive ganze Zahl ist und Z kleiner oder gleich N ist;
Senden, durch die Basisstation, von M vierten Signalsätzen gemäß den Z Antwortsignalen, wobei ein vierter Signalsatz auf jeder zweiten Platzressource gesendet wird; und Bestimmen, durch die Basisstation, der M zweiten Platzressourcen gemäß den Z Antwortsignalen.

4. Funkzugriffsverfahren, wobei das Verfahren umfasst:
Empfangen, durch das Benutzergerät (UE), von M zweiten Signalsätzen, die von einer Basisstation gesendet werden, wobei die M zweiten Signalsätze M erste Signalsätze in den N ersten Signalsätzen sind, die von der Basisstation gesendet wurden, ein erster Signalsatz auf jeder ersten Platzressource gesendet wird und jeder der M zweiten Signalsätze eine Anzeigeinformation umfasst, wobei
die Anzeigeinformation verwendet wird, um anzuzeigen, dass Systemnachrichten auf M zweiten Platzressourcen gesendet werden sollen, wobei M und N positive ganze Zahlen sind und M kleiner oder gleich N ist; und
Empfangen, durch das UE, der Systemnachricht auf der zweiten Platzressource gemäß der Anzeigeinformation, wobei die Systemnachricht einen Systeminformationsblock (SIB) 1 umfasst, der verwendet wird, um den Zugriff gemäß einer in der Systemnachricht angezeigten RACH-Ressource einzuleiten;
wobei der zweite Signalsatz ein erstes Rundfunksignal umfasst und das erste Rundfunksignal eine Information umfasst, die auf einem physischen Rundfunksteuerkanal (PBCH) getragen wird, und die Information, die auf dem PBCH getragen wird, die Anzeigeinformation umfasst, wobei die Anzeigeinformation ein Anzeigeinformationsfeld ist, das verwendet wird, um anzuzeigen, dass die Systemnachricht auf der zweiten Platzressource gesendet werden soll.

5. Verfahren nach Anspruch 4, wobei das Verfahren vor dem Empfangen durch das UE, von M zweiten Signalsätzen ferner umfasst:
Empfangen, durch das UE, von dritten Signalsätzen, die von der Basisstation gesendet werden, wobei ein dritter Signalsatz auf jeder ersten Platzressource gesendet wird; und
Rückmelden, durch das UE, von Antwortsignalen an die Basisstation gemäß den empfangenen dritten Signalsätzen, wobei das Antwortsignal eine Anzeigeinformation einer Platzressource umfasst, auf der der dritte Signalsatz gesendet werden soll.

6. Basisstation (11), umfassend einen Prozessor (110), einen Speicher (120) und einen Transceiver (140, 150), wobei:
der Speicher konfiguriert ist, eine Anweisung zu speichern; und der Prozessor konfiguriert ist, die Anweisung auszuführen, die in dem Speicher gespeichert wird, um den Transceiver zum Empfangen und Senden von Signalen zu steuern, und wenn der Prozessor die in dem Speicher gespeicherte Anweisung ausführt, die Basisstation konfiguriert ist, das Verfahren gemäß einem der Ansprüche 1 bis 3 durchzuführen.

7. Benutzergerät (UE) (12), umfassend einen Prozessor (210), einen Speicher (220) und einen Transceiver (240, 250), wobei:
der Speicher konfiguriert ist, eine Anweisung zu speichern; und der Prozessor konfiguriert ist, die Anweisung auszuführen, die in dem Speicher gespeichert wird, um den Transceiver zum Empfangen und Senden von Signalen zu steuern, und wenn der Prozessor die in dem Speicher gespeicherte Anweisung ausführt, die Basisstation konfiguriert ist, das Verfahren gemäß einem der Ansprüche 4 bis 5 durchzuführen.

8. Funkzugriffsvorrichtung, die auf eine Kommunikationsvorrichtung angewendet wird und Einheiten umfasst, die konfiguriert sind, die Schritte gemäß einem der Ansprüche 1 bis 3 durchzuführen.

9. Funkzugriffsvorrichtung, die auf eine Kommunikationsvorrichtung angewendet wird und Einheiten umfasst, die konfiguriert sind, die Schritte gemäß einem der Ansprüche 4 bis 5 durchzuführen.

10. Computerlesbares Speichermedium, umfassend Anweisungen, die bei Ausführung durch einen Computer, der in einem Endgerät enthalten ist, den Computer veranlassen, das Verfahren nach einem beliebigen der Ansprüche 1 bis 3 durchzuführen.

11. Computerlesbares Speichermedium, umfassend Anweisungen, die bei Ausführung durch einen Computer, der in einem Endgerät enthalten ist, den Computer veranlassen, das Verfahren nach einem beliebigen der Ansprüche 4 bis 5 durchzuführen.

## Revendications

1. Procédé d'accès radio, comprenant les étapes consistant à :
envoyer (501), par une station de base, N premiers ensembles de signaux, un premier ensemble de signaux étant envoyé sur chaque première ressource d'espace, M premiers ensembles de signaux parmi les N premiers ensembles de signaux étant des deuxièmes ensembles de signaux, et chacun des M deuxièmes ensembles de signaux comprenant une information d'indication,
l'information d'indication étant utilisée pour indiquer que des messages de système doivent être envoyés sur M secondes ressources d'espace, M et N étant des entiers positifs et M étant inférieur ou égal à N ; et
envoyer, par la station de base, M messages de système sur les M secondes ressources d'espace, le message de système comprenant un bloc d'informations de système (SIB) 1 qui est utilisé par un équipement d'utilisateur (UE) pour amorcer un accès selon une ressource RACH indiquée dans le message de système ;
le deuxième ensemble de signaux comprenant un premier signal de diffusion, le premier signal de diffusion comprenant une information transportée sur un canal physique de contrôle de diffusion (PBCH), l'information transportée sur le PBCH comprenant l'information d'indication, et l'information d'indication étant un champ d'information d'indication qui est utilisé pour indiquer que le message de système doit être envoyé sur la seconde ressource d'espace.

2. Procédé selon la revendication 1, le procédé comprenant en outre, avant l'envoi, par la station de base, de N premiers ensembles de signaux, l'étape consistant à :
déterminer, par la station de base, les M premières ressources d'espace des M premiers ensembles de signaux selon une règle prédéfinie.

3. Procédé selon la revendication 1, le procédé comprenant en outre, avant l'envoi, par la station de base, de N premiers ensembles de signaux, les étapes consistant à :
envoyer, par la station de base, N troisièmes ensembles de signaux à l'UE, un troisième ensemble de signaux étant envoyé sur chaque première ressource d'espace ;
recevoir, par la station de base, Z signaux de réponse envoyés par l'UE, chaque signal de réponse comprenant une information d'indication d'une ressource d'espace sur laquelle le troisième ensemble de signaux doit être envoyé, Z étant un entier positif et Z étant inférieur ou égal à N ;
envoyer, par la station de base, M quatrièmes ensembles de signaux selon les Z signaux de réponse, un quatrième ensemble de signaux étant envoyé sur chaque seconde ressource d'espace ; et
déterminer, par la station de base, les M secondes ressources d'espace selon les Z signaux de réponse.

4. Procédé d'accès radio, le procédé comprenant les étapes consistant à :
recevoir, par un équipement d'utilisateur (UE), M deuxièmes ensembles de signaux envoyés par une station de base, les M deuxièmes ensembles de signaux étant M premiers ensembles de signaux parmi N premiers ensembles de signaux envoyés par la station de base, un premier ensemble de signaux étant envoyé sur chaque première ressource d'espace et chacun des M deuxièmes ensembles de signaux comprenant une information d'indication,
l'information d'indication étant utilisée pour indiquer que des messages de système doivent être envoyés sur M secondes ressources d'espace, M et N étant des entiers positifs et M étant inférieur ou égal à N ; et
recevoir, par l'UE, le message de système sur la seconde ressource d'espace selon l'information d'indication, le message de système comprenant un bloc d'informations de système (SIB) 1 qui est utilisé pour amorcer un accès selon une ressource RACH indiquée dans le message de système ;
le deuxième ensemble de signaux comprenant un premier signal de diffusion, le premier signal de diffusion comprenant une information transportée sur un canal physique de contrôle de diffusion (PBCH), l'information transportée sur le PBCH comprenant l'information d'indication, et l'information d'indication étant un champ d'information d'indication qui est utilisé pour indiquer que le message de système doit être envoyé sur la seconde ressource d'espace.

5. Procédé selon la revendication 4, le procédé comprenant en outre, avant la réception, par l'UE, de M deuxièmes ensembles de signaux, les étapes consistant à :
recevoir, par l'UE, des troisièmes ensembles de signaux envoyés par la station de base, un troisième ensemble de signaux étant envoyé sur chaque première ressource d'espace ; et
retourner, par l'UE, des signaux de réponse à la station de base selon les troisièmes ensembles de signaux reçus, le signal de réponse comprenant une information d'indication d'une ressource d'espace sur laquelle le troisième ensemble de signaux doit être envoyé.

6. Station de base (11), comprenant un processeur (110), une mémoire (120) et un émetteur-récepteur (140, 150),
la mémoire étant configurée pour stocker une instruction ; et le processeur étant configuré pour exécuter l'instruction stockée dans la mémoire pour contrôler l'émetteur-récepteur pour recevoir et envoyer des signaux, et quand le processeur exécute l'instruction stockée dans la mémoire, la station de base étant configurée pour réaliser le procédé selon l'une quelconque des revendications 1 à 3.

7. Équipement d'utilisateur (UE) (12), comprenant un processeur (210), une mémoire (220) et un émetteur-récepteur (240, 250),
la mémoire étant configurée pour stocker une instruction ; et le processeur étant configuré pour exécuter l'instruction stockée dans la mémoire pour contrôler l'émetteur-récepteur pour recevoir et envoyer des signaux, et quand le processeur exécute l'instruction stockée dans la mémoire, la station de base étant configurée pour réaliser le procédé selon l'une quelconque des revendications 4 et 5.

8. Dispositif d'accès radio, appliqué à un dispositif de communication et comprenant des unités configurées pour réaliser les étapes selon l'une quelconque des revendications 1 à 3.

9. Dispositif d'accès radio, appliqué à un dispositif de communication et comprenant des unités configurées pour réaliser les étapes selon l'une quelconque des revendications 4 et 5.

10. Support de stockage lisible par ordinateur, comprenant des instructions qui, lorsqu'elles sont exécutées par un ordinateur, compris dans un dispositif terminal, amènent l'ordinateur à réaliser le procédé selon l'une quelconque des revendications 1 à 3.

11. Support de stockage lisible par ordinateur, comprenant des instructions qui, lorsqu'elles sont exécutées par un ordinateur, compris dans un dispositif terminal, amènent l'ordinateur à réaliser le procédé selon l'une quelconque des revendications 4 et 5.
